# EUROPEAN PATENT SPECIFICATION

(11) **EP 3 445 722 B1**
(45) Date of publication and mention of the grant of the patent: **23.09.2020**
(21) Application number: 17786252.1
(22) Date of filing: 19.04.2017
(51) Int. Cl.: C02F 1/48, A23L 3/32, B01J 19/08

(54) **PEF CHAMBER**
PEF-KAMMER
CHAMBRE CEP

(30) Priority: 20.04.2016 WO PCT/SE2016/050343; 19.10.2016 SE 1651369
(43) Date of publication of application: 27.02.2019
(73) Proprietor: ARC Aroma Pure AB, 224 78 Lund (SE)
(72) Inventor: HENRIKSSON, Pär H, 223 55 Lund (SE); LILJA, Per, 216 17 Limhamn (SE)
(74) Representative: AWA Sweden AB
(86) International application number: PCT/SE2017/050385
(87) International publication number: WO 2017/184066

(56) References cited:
- WO-A1-99/39752
- WO-A1-2006/121397
- WO-A1-2012/044875
- WO-A1-2016/171610
- CN-A- 101 502 304
- US-A- 5 662 031
- US-A- 5 690 978
- US-A- 5 927 069
- US-A- 6 110 423

## Description

### Field of the invention

The present invention relates to a pulsed electric field chamber.

### Technical Background

There are known pulsed electric field (PEF) chambers. For instance in WO 2012/044875 there is disclosed a system for the treatment of a gas, said system comprising a gas inlet for receiving the gas; a plurality of dielectric sections defining two or more discharge chambers coupled to the gas inlet; first and second electrodes disposed in each of the discharge chambers; electrically conductive shield portions positioned between adjacent ones of the discharge chambers; a gas outlet coupled to the discharge chambers; and a circuit in communication with the shield portions and the first and the second electrodes in the discharge chambers.

One aim of the present invention is to provide a PEF chamber with an optimal electrode configuration. Another aim of the present invention is to provide a PEF chamber having both an optimal chamber configuration and electrode configuration. US-A-5 927 069 discloses a treatment chamber with electrodes.

### Summary of the invention

The stated purposes above are achieved by a PEF (pulsed electric field) chamber comprising a PEF treatment tube, a casing and at least two electrode units, wherein said at least two electrode units are insertable to be fixated in the casing and into the PEF treatment tube according to claim 1.

At least part of the PEF treatment tube is contained and embedded in an outer casing. This arrangement provides insulation and/or pressure stability.

The at least two electrode units are possible to insert and fixate in the casing and into the PEF treatment tube after installation of the PEF chamber in a system. The fixation functionality may be obtained by different means, such as e.g. by a gripping and locking function when inserting the electrode units, providing threaded electrode units screwed into the PEF chamber or by providing additional means which enable locking and unlocking of the electrode units when inserted into the PEF chamber.

The at least two electrode units are detachable. Also this detaching functionality is enabled after installation of the final PEF chamber in a system.

As may be understood from above, the fixating or locking of the electrodes, and also the detaching thereof, may be driven by the one operating the system into which the PEF chamber has been installed.

In addition to enabling locking and detaching after installation, the arrangement according to the present invention also provides additional advantages. For example, the electrode arrangement as such is simple to use and the electrode units can easily be replaced if there is a need thereof. There are also several other advantages provided by the present invention, and this will be further discussed below.

According to WO 2012/044875 different electrode types are discussed, such as a threaded rod, sharp edge, wire mesh, plate or wire. Moreover, in for example CN 101502304 there is disclosed a PEF chamber having circular-arc metal electrodes. None of this documents, however, relate to a PEF chamber arrangement comprising insertable electrodes which can be fixated into and detached from a PEF chamber, such as is possible according to the present invention.

### Brief description of the drawings

In fig. 1 there is shown a PEF chamber according to one embodiment of the present invention.
In fig. 2 there is shown a PEF chamber according to another specific embodiment of the present invention.
In fig. 3 there is shown a PEF chamber according to yet another embodiment of the present invention. In fig. 2 there is shown a PEF chamber according to another specific embodiment of the present invention.
Fig. 4 shows a PEF chamber according to one specific embodiment of the present invention where two round electrodes are arranged to form semi-circular arc surfaces within the tube at the geometrical narrowing.
Fig. 5 shows a PEF chamber according to one specific embodiment of the present invention where several round electrodes are provided at the geometrical narrowing.
Fig. 6 shows an example of a circuit diagram of a system comprising a PEF chamber according to one specific embodiment of the present invention. Possible graphs of the pulse P, voltage V and pulses V₂ and V₃ are also provided.
Fig. 7 shows another specific embodiment of the present invention, in this case where a pulse shaper (further explained below) is incorporated.
Fig. 8 also shows an embodiment in line with the one disclosed in fig. 7.

### Specific embodiments of the invention

Below there are disclosed different embodiments according to the present invention.

As mentioned above, the fixation of the electrode units can be obtained in different ways according to the present invention, such as e.g. by a gripping, locking effect, arranging additional means enabling locking and unlocking, etc. According to one specific embodiment of the present invention, the at least two electrode units are threaded and insertable by screwing them into nut units arranged in the casing.

Furthermore, the electrode configuration may vary according to the present invention. According to one embodiment, the two electrode units are one electrode pair.

Not only the electrode units are insertable and detachable, but in fact the entire PEF chamber unit may also have this advantage. Therefore, according to one specific embodiment of the present invention, the PEF treatment tube has two open ends having attachment means enabling the PEF chamber to be a plug-in device.

According to yet another specific embodiment of the present invention, the PEF treatment tube has a length L and an inner width IW from one side of the tube to the other side of the PEF treatment tube in a cross section being perpendicular to the length L thereof, and where the PEF treatment tube has a geometrical narrowing of the inner width IW somewhere along the length L of the PEF treatment tube, and where the at least two electrode units are arranged opposite each other at or close to the geometrical narrowing of the inner width IW along the length L of the PEF treatment tube.

The geometrical narrowing of the tube is provided as a geometrical construction limitation to provide a pressure build up. This pressure build up is important to ensure that there is no risk for the formation of gas bubbles where the actual PEF is applied. The PEF is applied by use of electrode units arranged opposite each other at the geometrical narrowing.

In relation to the inner width IW measure of the present invention it should be noted that the IW may be different one both sides of the geometrical narrowing. Furthermore, what may be seen as the measures IWin and IWout, where "in" implies the start of the inflow side and "out" implies the end of the outflow side, may also be different according to the present invention. According to one specific embodiment of the present invention, IWin is larger than IWout.

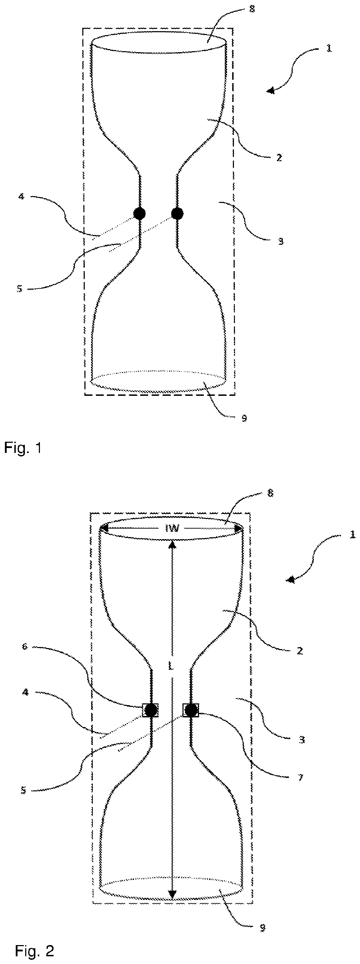

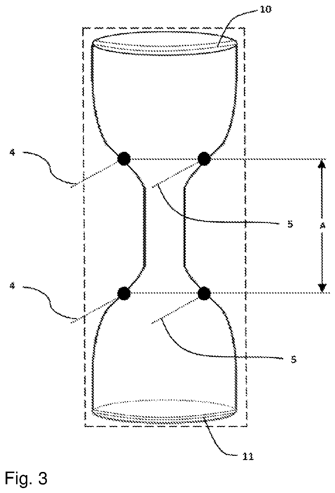

According to the present invention it is possible to include a geometrical narrowing of the actual PEF chamber. It is important to understand that according to this embodiment of the present invention then the at least two electrodes may be arranged anywhere along this narrowing. If only two electrodes, i.e. an electrode pair, is provided in the PEF chamber then this may suitably be arranged in the middle of the geometrical narrowing (see fig. 1), however also other positions are possible. As will be explained below, if double electrode pairs are included then these are suitable arranged in the start of the geometrical narrowing along the length L at opposite sides thereof (see fig 3). The geometrical narrowing according to the present invention has the advantage that is provides a geometrical construction limitation which creates a pressure build up to eliminate the risk of air bubbles or gas in the medium when the actual PEF is applied. This is e.g. not the intention of CN 101502304. Furthermore, the provided arrangement disclosed in CN 101502304 does not seem to be able to provide the necessary pressure build up. Moreover, it is clear that it is the electrodes as such that create the tapered portion of the tube according to CN 101502304 and then the ends of the electrodes are in contact also with the liquid going into the tapered part. This is not intended according to the present invention.

Furthermore, the geometrical narrowing of the tube of the PEF chamber according to the present invention may also be accomplished in different ways and by different means. According to one specific embodiment of the present invention, the geometrical narrowing is provided by a compression on opposite sides of the tube. As an example, this may be provided by means of heat compression. Another alternative to also provide the geometrical narrowing is to mill off material of the tube and then incorporate units in the holes achieved by milling off. The units incorporated may be the electrodes as such or may be units of suitable material which also has the electrodes attached thereto. With reference to the above disclosed, according to one specific embodiment of the present invention, the geometrical narrowing is provided by one or more incorporation units.

Moreover, according to the present invention the geometrical narrowing may be flexible. This implies that the section with the geometrical narrowing may flex (may widen) if the applied pressure is too high, implying that the widening of the geometrical narrowing is dependent on the pressure in the chamber. This ability may be provided by different means. According to one embodiment, the material provided in the geometrical narrowing is flexible in itself. The choice of the material should of course be chosen to provide a suitable range of flexibility. According to yet another specific embodiment of the present invention, the geometrical narrowing is spring-loaded or comprises a counterweight unit, such as e.g. a balance system. As an example, the section of the geometrical narrowing of the tube may be arranged with a spring-loaded clip or holder or the like. As one example it may be mentioned that the arrangement may comprise the combination of a tube of a more flexible material which is provided with a spring-loaded clip or holder.

With the incorporation of a spring, the actual spring may press on the side of the tube to create the geometrical narrowing. The spring may be set or adjusted with a set screw and if the pressure is too high in the tube then the spring gives in. Moreover, the set screw may be adjusted to adjust the space between the electrodes. Therefore, according to one specific embodiment of the present invention, the geometrical narrowing is adjustable.

As hinted above, the adjustment screw may be spring-loaded so that the electrodes can flex back when the pressure is high or when larger particles are passing the geometrical narrowing.

There are other known PEF systems where the medium under treatment is pressurized so that the risk of air bubbles or gas in the medium is eliminated. For example in WO 2009/126084 and WO 03/056941 this is obtained by use of pumps. According to the present invention this is, however, obtained by having a narrowing of the actual PEF chamber at the site of the at least two electrodes. Again, this is a solution that provides several advantages, such as a simplified production and PEF system as a whole when comparing to the need of a PEF chamber in the form of a pump. The pump installation in a PEF system according to the present invention may be of any suitable type and be held totally outside of the actual PEF unit. Moreover, the present invention may be provided as a plug-in device which in the form of a disposable unit which has several advantages in itself, such as decreased time adjusting time when there is a need for replacing the PEF chamber, and increased possibility for easy installation and incorporation of add-ons relating to the disposable unit.

At least the geometrical narrowing of the PEF treatment tube according to the present invention is contained and embedded in an outer casing to obtain insulation and/or pressure stability. As may be understood from above, not only the narrowing section may be contained and embedded but also parts extending before and after this section may be included. All of the different embodiments of the present invention may be included in such an embedment, but of special interest for such inclusions are the embodiments when there otherwise is an evident risk of leakage. Such leakage is of course by no means acceptable so whenever there might be such risk then the arrangement must be sealed in a secure way, either by using an embedment as disclosed above, or by other means. The material used for embedment may be a suitable rubber, ceramic or moulded plastic, e.g. liquid plastic. As the unit is intended to be used together with high voltage, the insulting properties are important. Moreover, the actual sections where there is a higher risk of leakage, such as between tube and incorporated electrode units, may be sealed before the embedment, for instance by using silicone or rubber seals or the like.

The PEF chamber according to the present invention may include several electrode units. According to specific embodiment, the PEF chamber comprises at least two electrode pairs. This implies at least four electrode units, e.g. such as shown in fig. 3. According to one specific embodiment of the present invention, the PEF treatment tube has a length L and an inner width IW from one side of the tube to the other side of the PEF treatment tube in a cross section being perpendicular to the length L thereof, wherein the PEF treatment tube has a geometrical narrowing of the inner width IW somewhere along the length L of the PEF treatment tube, wherein at least two electrode pairs are arranged so that each two electrode units of each electrode pairs are arranged opposite each other within the geometrical narrowing of the inner width IW along the length L of the PEF treatment tube, and wherein the at least two electrode pairs are arranged at a distance A from each other. This embodiment is shown in fig. 3 and wherein also the distance A is depicted.

According to yet another specific embodiment of the present invention, two electrode pairs are arranged in the PEF chamber so that a first electrode pair is arranged at the beginning of the geometrical narrowing of the inner width IW along the length L and wherein a second electrode pair is arranged at the end of the geometrical narrowing of the inner width IW along the length L. One example of such a configuration of two electrode pairs is shown in fig. 3.

This specific embodiment according to the present invention has several advantages. First of all, the four electrodes in this case are positioned to provide a homogenous electrical field. Moreover, the current direction is controlled so that the current is not transferred from an electrode directly over to the opposite one on the other side of the PEF treatment tube, but instead is transferred along the PEF treatment tube or diagonally. In the case when the current is transferred along the PEF treatment tube from one electrode to another one, this arrangement provides a longer distance from one electrode to the other which also is preferable. This arrangement provides virtually the same distance between any of the two first electrodes and any of the two second electrodes which in turn promotes a uniform electric field distribution.

Furthermore, also the shape of the PEF treatment tube is of interest according to the present invention. According to one specific embodiment of the present invention, the geometrical narrowing has a venturi shape. Such a shape is shown in all of the figures, however, it is important to understand that also another shape of the geometrical narrowing is totally possible.

According to yet another specific embodiment, then the ends of the geometrical narrowing extend into bent sections providing elongation of the inner width IW. These bent sections are of interest to ensure a "smooth" transfer path of the current from one electrode to another along the PEF treatment tube, i.e. without corners which in turn eliminates corner effects. Moreover, according to yet another specific embodiment of the present invention, ends of the geometrical narrowing extend into bent sections providing elongation of the inner width IW, said bent sections thereafter continuing in a tubular wider inner width IW, and wherein at least two electrode pairs are arranged so that each two electrode units of each electrode pairs are arranged opposite each other and at the bent sections. Also this feature is shown in fig. 3 where the electrodes are provided at these bent sections along the PEF treatment tube.

According to yet another specific embodiment of the present invention, the PEF treatment tube of the PEF chamber is non-conductive in an area between electrode units from different electrode pairs in a direction along the length L of the PEF treatment tube. This implies that if at least two electrodes are arranged along the same side of the PEF treatment tube, then an insulator should be provided between such electrodes. If the treatment is performed between these electrodes such an insulator ensures that the electrodes are not burned. As one example, electrodes may be provided in pairs in the flow direction of the medium being treated. In such a case the opposite electrodes may have the same potential, and insulation is arranged across the flow direction. The insulator may be provided by different means, e.g. a geometrical narrowing which provides virtually the same distance between any of the two first electrodes and any of the two second electrodes which in turn promotes a uniform electric field distribution, or e.g. a grid.

According to yet another specific embodiment of the present invention, then the actual electrodes provide the geometrical narrowing by being arranged into the PEF treatment tube. The at least two electrode units are arranged to form a semi-circular arc surface within the PEF treatment tube. In this case the electrodes may be round where half of them are provided within the PEF treatment tube and the other half outside of the PEF treatment tube. The electrodes may of course also have other shapes, however round electrodes may be beneficial. The semi-circular arc shape within the tube has the advantage that the part of the electrode being in contact with the liquid or substrate to be treated provides a more homogenous field when the PEF is applied. Furthermore, round electrodes without corners also have the advantage of eliminating corner effects. Corner effects may give increased heat in the corners and this affects the distribution of the field when PEF is applied.

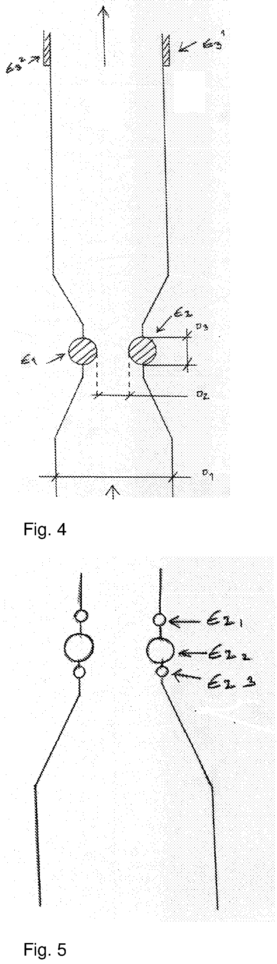

Also other features relating to the arrangement of the electrodes may be of interest according to the present invention. For example, and referring to fig. 4, an area provided between two electrode units, which is over distance D₂ of the inner width IW, may be less than 50% of an area provided outside of the geometrical narrowing of the inner width IW, which is over distance D₁ of the inner width IW.

Furthermore, according to one embodiment of the present invention, opposite electrode units are arranged also outside of the geometrical narrowing of the inner width IW along the length L of the PEF treatment tube. One such example is shown in fig. 4 which is further discussed below. According to one embodiment, two or three electrodes are arranged on each side of the tube, together forming two or three electrode pairs. By use of several smaller electrodes, such as smaller round electrodes as shown in fig. 5, it is possible to simulate one large electrode and distribute the width of the field of the applied PEF in the flow direction without increase the voltage-current with the same factor as the field width. In relation to fig. 5 it should further be said that the geometrical narrowing can extend into a thinner tube, which is shown in fig. 5. Also in this case several electrodes may be arranged along the entire tube, also electrode pairs at a distance from the start of the geometrical narrowing, i.e. at a distance from the first electrode pair (and optionally second electrode pair). Such a third electrode pair is then also provided along the thin tube extension after the geometrical narrowing.

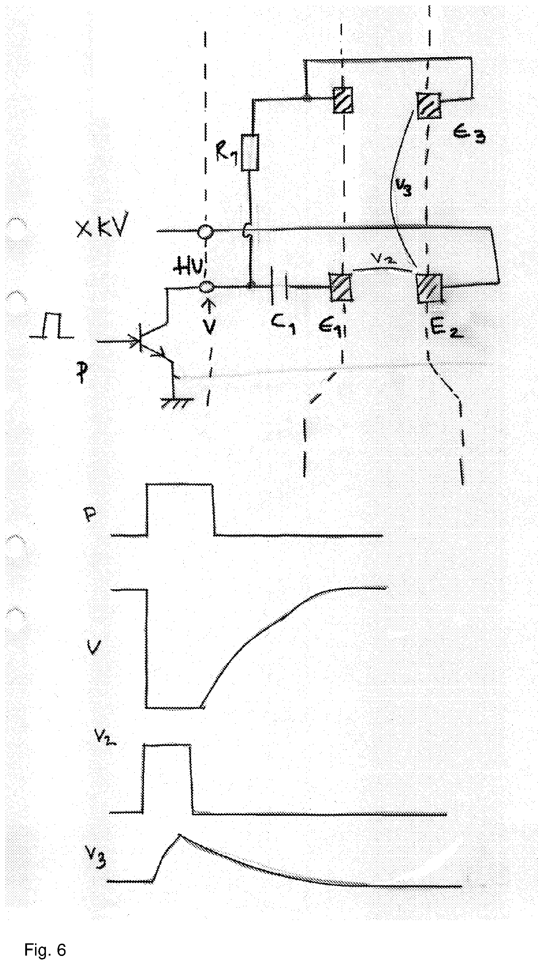

According to yet another specific embodiment, opposite electrode units are arranged also outside of the geometrical narrowing of the inner width IW along the length L of the tube. One example thereof is seen in fig. 4 where one such electrode pair is arranged in the tube. Such electrode units may be an earthed tube or electrodes arranged on a distance from the electrode units at the geometrical narrowing as an isolated electrode pair. This is seen in fig. 4. According to one specific embodiment, a distance between an electrode unit arranged outside of the geometrical narrowing to an electrode unit arranged inside of the geometrical narrowing is at least 10 times, such as in the range of 10 - 30 times, of a distance between the two electrode units arranged opposite each other at the geometrical narrowing. The above implies that is preferred that the distance, i.e. the resistance, E₁ → E₂ << E₁, E₂ → E₃¹ E₃² (electric resistance) (see further explanation below and in fig. 4). Also this feature is provided in the alternative shown in fig. 4. The electrode units provided outside of the geometrical narrowing enables an A.C. connection of a generator to the PEF chamber. This is further shown in fig. 6 and discussed below.

As mentioned above, the PEF chamber may be a plug-in device possible to connect and lock by attachment means. According to one embodiment, at least one of the attachment means is threaded, is a nut or a flange. It should, however be mentioned that all possible versions which may ensure a secure locking are possible according to the present invention. Also seal units, such as gaskets may be of interest to ensure the secure locking. Another possible alternative then the ones disclosed above is the use of additional locking means for the installation, such as locking arms or the like, to lock the PEF chamber to connecting tubes. Such locking arms may be separate part to use only when installing and removing and replacing a PEF chamber according to the present invention. Also in these cases gaskets, such as e.g. O-ring gaskets, may be important units to use between the PEF chamber and connecting other units, such as tubing.

Furthermore, the PEF chamber according to the present invention may be a part of a system. This system may e.g. be a plug-in box which is easy to replace as a whole. Such a plug-in box may also be seen as the disposable in a docking system. As hinted above, also an embedded box comprising the PEF chamber may be such a box system according to the present invention. The box may have connecting devices, such as pins or the like, which are intended to be connected to a fixed box being in contact with the electrical network, when the box is installed in place. Such a box may therefore be provided with different indication means. Therefore, according to one specific embodiment, PEF chamber is part of a box having electrode contact means, i.e. connecting devices, and "in place" indication means. It should be noted that a PEF chamber according to the present invention which is not a part of a box system may still have different indication means, such as e.g. "in place" or "error" indication means. The indication means may be of different type and one example is LED. Another example is a light conductor in the form of a plastic rod that transports the light from the fixed mother connection box. Also other typical warning indicators are totally possible.

Also other indication means are possible. One example is copy protection means. This may be accomplished by different alternatives, such as bar codes, a non-volatile memory that contain serial number, time of use, and other production parameters and the like, etc. Such a memory mentioned above may be altered by the host electrical system during use to foresee expiration time and maximum use time, etc.

The present invention finds use in many different industrial applications. The PEF chamber according to the present invention may be employed in all different areas where PEF technology is of interest. Examples are in the treatment of pumpable liquids, such as different types of foodstuffs, for the treatment of ballast water, and in the hygenization of sludge before being allowed to be spread e.g. in agriculture or further processed in fermentation or biogas production.

### Detailed description of the drawings

In fig. 1 there is shown a PEF chamber 1 according to one embodiment of the present invention. The PEF chamber 1 comprises a PEF treatment tube 2, a casing 3 embedding at least a part of the PEF treatment tube 2 and two electrode units 4, 5. The two electrode units 4, 5, in this case being screw electrodes 4, 5, are insertable to be fixated in the casing 3 and into the PEF treatment tube 2. Moreover, in this case the PEF chamber 2 has a venturi shape and the two screw electrodes 4, 5 are arranged opposite each other at a geometrical narrowing of the PEF chamber 2.

In fig. 2 there is shown a PEF chamber 1 according to the embodiment shown in fig. 1, however in this case also including nut units 6, 7 arranged in the casing 3. Furthermore, also the length L of the PEF treatment tube 2 and the inner width IW from one side of the PEF treatment tube 2 to the other side of the PEF treatment tube 2 are also shown.

In fig. 3 there is shown a PEF chamber 1 according to yet another embodiment of the present invention. According to this embodiment two electrode pairs, i.e. in total four electrodes, are arranged. Furthermore, the at least two electrode pairs are arranged at a distance A from each other. Moreover, the electrodes 4, 5 are arranged at bent sections ending the geometrical narrowing of the PEF treatment tube 2 on both sides of the geometrical narrowing.

Fig. 4 shows a PEF chamber according to one specific embodiment of the present invention where two round electrodes (E₁ and E₂) are arranged to form semi-circular arc surfaces within the tube at the geometrical narrowing. As seen, the distance D₂ is about the same as distance D₃, however the area over D₂ is normally less than 50% of the area over distance D₁, which is the width of the tube outside of the geometrical narrowing. The suitable areas are of course dependent on the flow and type of liquid to process.

Moreover, an isolated electrode pair (E₃¹ and E₃²), which may be earthed, is arranged at a distance from the geometrical narrowing and the electrodes there. The distance between E₁ and E₂ to E₃¹ and E₃², respectively, is typically 10 - 30 times longer than the distance between E₁ and E₂. This has the advantage that the current first passes the capacitor and the substrate / liquid to treat via the two nearby electrodes at the geometrical narrowing. When the pulse is finished the capacitor has been charged and then the current instead passes via the more distant electrodes and then back to one of the electrodes at the geometrical narrowing. In this way there is provided a fast short pulse in one direction and subsequently a longer pulse in an opposite direction which discharges the capacitor.

Fig. 5 shows a PEF chamber according to one specific embodiment of the present invention where several round electrodes (E_{2,1}, E_{2,2}, E_{2,3}) are provided at the geometrical narrowing. This solution is also possible to incorporate as an alternative in the example shown in fig. 4, wherein also earthed electrodes outside of the geometrical narrowing may be arranged.

The earthed electrodes shown in fig. 4 enable an A.C. connection of the generator to the PEF chamber. By use of such an electrode pair (E₃¹ and E₃²) an A.C. connection may be used as shown in an example in fig. 6. The A.C. connection has the advantage that the energy consumption is reduced and that a bipolar pulse is created as the capacitor is charged, which in turn provides the ability of being more resistant to low ohmic resistance or short circuit due to particles in the treated slurry or the like.

As a further explanation of the fig. 6, electrodes E₁ and E₂ are arranged at the geometrical narrowing of the PEF chamber. These are connected to the pulse source HV via the capacitor C₁. When the pulse P is applied, then C₁ is charged, which renders voltage V to be located in the capacitor C₁ when the pulse P is finished. At the same time, the pulse V₂ appears between the electrodes E₁ and E₂. An optional resistor R₁ may be arranged in the system so that the capacitor C₁ is discharged via a third electrode E₃ to electrode E₂, which renders a pulse V₃ between E₃ and E₂. The current between the electrode E₂ and the substrate or liquid to treat will have two directions. This renders a reduced material loss in the electrode and renders a better treatment of the substrate or liquid.

The AC coupling using a capacitor will limit the current in the case of short circuit between the electrodes. If the current is high then the capacitor will charge faster, when fully charged the voltage will drop over the capacitor an no additional current will pass between the electrodes E₁ and E₂. Thus the capacitor works a a short circuit protection and protection against dc currents.

As said, the electrode E₃ may be a separate and isolated electrode, but can in fact also be part of the installation if a tube of conductive material is used. In such a case a floating generator having a "virtual floating earth" is suitable to use in the installation.

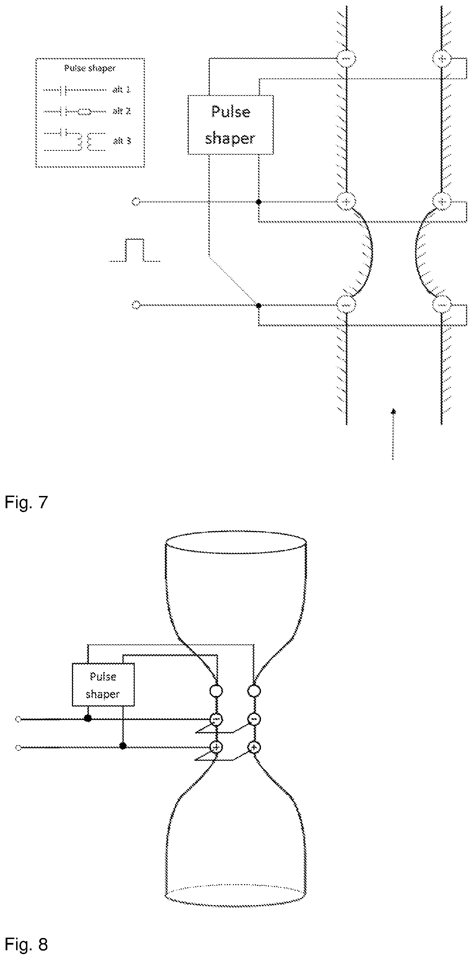

In fig. 7 yet another specific embodiment of the present invention is disclosed. In this case a so called pulse shaper is incorporated. The pulse shaper, as shown in the left of fig. 7, may include different types of combinations of capacitors, resistances and transformers. This provides not only the possibility of providing shorter pulses but also the capability of increasing and decreasing the voltage. In fig. 8 there is shown one specific embodiment where a pulse shaper is included in a PEF chamber system according to the present invention.

## Claims

1. PEF (pulsed electric field) chamber (1) comprising a PEF treatment tube (2), a casing (3) and at least two electrode units (4, 5), ***characterized in* that** said at least two electrode units (4, 5) are insertable to be fixated in the casing (3) and into the PEF treatment tube (2), wherein said at least two electrode units (4, 5) are detachable and wherein said at least two electrode units (4, 5) are arranged to form a semi-circular arc surface within the PEF treatment tube (2).

2. PEF chamber (1) according to claim 1, wherein said at least two electrode units (4, 5) are threaded and insertable by screwing them into nut units (6, 7) arranged in the casing (3).

3. PEF chamber (1) according to claim 1 or 2, wherein the two electrode units (4, 5) are one electrode pair.

4. PEF chamber (1) according to any of claims 1-3, wherein the PEF treatment tube (2) has two open ends (8, 9) having attachment means (10, 11) enabling the PEF chamber (1) to be a plug-in device.

5. PEF chamber (1) according to any of the preceding claims, wherein the PEF treatment tube (2) has a length L and an inner width IW from one side of the tube to the other side of the PEF treatment tube (2) in a cross section being perpendicular to the length L thereof, wherein the PEF treatment tube (2) has a geometrical narrowing of the inner width IW somewhere along the length L of the PEF treatment tube (2), and wherein the at least two electrode units (4, 5) are arranged opposite each other at or close to the geometrical narrowing of the inner width IW along the length L of the PEF treatment tube (2).

6. PEF chamber (1) according to any of the preceding claims, wherein the PEF chamber (1) comprises at least two electrode pairs.

7. PEF chamber (1) according to any of the preceding claims, wherein the PEF treatment tube (2) has a length L and an inner width IW from one side of the tube to the other side of the PEF treatment tube (2) in a cross section being perpendicular to the length L thereof, wherein the PEF treatment tube (2) has a geometrical narrowing of the inner width IW somewhere along the length L of the PEF treatment tube (2), wherein at least two electrode pairs are arranged so that each two electrode units (4, 5) of each electrode pairs are arranged opposite each other within the geometrical narrowing of the inner width IW along the length L of the PEF treatment tube (2), and wherein the at least two electrode pairs are arranged at a distance A from each other.

8. PEF chamber (1) according to claim 7, wherein two electrode pairs are arranged in the PEF chamber so that a first electrode pair is arranged at the beginning of the geometrical narrowing of the inner width IW along the length L and wherein a second electrode pair is arranged at the end of the geometrical narrowing of the inner width IW along the length L.

9. PEF chamber (1) according to any of claims 5-8, wherein the geometrical narrowing has a venturi shape.

10. PEF chamber (1) according to any of the claims 5-9, wherein ends of the geometrical narrowing extend into bent sections providing elongation of the inner width IW.

11. PEF chamber (1) according to any of claims 5-10, wherein ends of the geometrical narrowing extend into bent sections providing elongation of the inner width IW, said bent sections thereafter continuing in a tubular wider inner width IW, and wherein at least two electrode pairs are arranged so that each two electrode units (4, 5) of each electrode pairs are arranged opposite each other and at the bent sections.

12. PEF chamber (1) according to any of claims 6-11, wherein the PEF treatment tube (2) of the PEF chamber (1) is non-conductive in an area between electrode units from different electrode pairs in a direction along the length L of the PEF treatment tube (2).

## Patentansprüche

1. PEF(gepulstes elektrisches Feld)-Kammer (1), umfassend ein PEF-Behandlungsrohr (2), ein Gehäuse (3) und mindestens zwei Elektrodeneinheiten (4, 5), ***gekennzeichnet dadurch, dass*** die mindestens zwei Elektrodeneinheiten (4, 5) einführbar sind, um in dem Gehäuse (3) und in dem PEF-Behandlungsrohr (2) fixiert zu werden, wobei die mindestens zwei Elektrodeneinheiten (4, 5) abnehmbar sind und wobei die mindestens zwei Elektrodeneinheiten (4, 5) angeordnet sind um eine halbkreisförmigen Bogenfläche in dem PEF-Behandlungsrohr (2) zu bilden.

2. PEF-Kammer (1) nach Anspruch 1, wobei die mindestens zwei Elektrodeneinheiten (4, 5) mit einem Gewinde versehen und einführbar sind, indem sie in, in dem Gehäuse (3) angeordnete, Mutterneinheiten (6, 7) eingeschraubt werden.

3. PEF-Kammer (1) nach Anspruch 1 oder 2, wobei die zwei Elektrodeneinheiten (4, 6) ein Elektrodenpaar sind.

4. PEF-Kammer (1) nach einem der Ansprüche 1 bis 3, wobei das PEF-Behandlungsrohr (2) zwei offene Enden (8, 9) mit Befestigungsmitteln (10, 11) aufweist, die es der PEF-Kammer (1) ermöglichen, eine Einsteckvorrichtung zu sein.

5. PEF-Kammer (1) nach einem der vorhergehenden Ansprüche, wobei das PEF-Behandlungsrohr (2) eine Länge L und eine Innenbreite IW von einer Seite des Rohrs zur anderen Seite des PEF-Behandlungsrohrs (2) in einem Querschnitt aufweist, der senkrecht zu seiner Länge L ist, wobei das PEF-Behandlungsrohr (2) eine geometrische Verengung der Innenbreite IW irgendwo entlang der Länge L des PEF-Behandlungsrohrs (2) aufweist, und wobei die mindestens zwei Elektrodeneinheiten (4, 5) bei oder nahe der geometrischen Verengung der Innenbreite IW entlang der Länge L des PEF- Behandlungsrohrs (2) einander gegenüberliegend angeordnet sind.

6. PEF-Kammer (1) nach einem der vorhergehenden Ansprüche, wobei die PEF-Kammer (1) mindestens zwei Elektrodenpaare umfasst.

7. PEF-Kammer (1) nach einem der vorhergehenden Ansprüche, wobei das PEF-Behandlungsrohr (2) eine Länge L und eine Innenbreite IW von einer Seite des Rohrs zur anderen Seite des PEF-Behandlungsrohrs (2) in einem Querschnitt aufweist, der senkrecht zu seiner Länge L ist, wobei das PEF-Behandlungsrohr (2) eine geometrische Verengung der Innenbreite IW irgendwo entlang der Länge L des PEF-Behandlungsrohrs (2) aufweist, wobei mindestens zwei Elektrodenpaare so angeordnet sind, dass jeweils zwei Elektrodeneinheiten (4, 5) jedes Elektrodenpaars innerhalb der geometrischen Verengung der Innenbreite IW entlang der Länge L des PEF-Behandlungsrohrs (2) einander gegenüberliegend angeordnet sind, und wobei die mindestens zwei Elektrodenpaare in einem Abstand A voneinander angeordnet sind.

8. PEF-Kammer (1) nach Anspruch 7, wobei zwei Elektrodenpaare in der PEF-Kammer so angeordnet sind, dass ein erstes Elektrodenpaar am Anfang der geometrischen Verengung der Innenbreite IW entlang der Länge L angeordnet ist und wobei ein zweites Elektrodenpaar am Ende der geometrischen Verengung der Innenbreite IW entlang der Länge L angeordnet ist.

9. PEF-Kammer (1) nach einem der Ansprüche 5 bis 8, wobei die geometrische Verengung eine Venturi-Form aufweist.

10. PEF-Kammer (1) nach einem der Ansprüche 5 bis 9, wobei sich die Enden der geometrischen Verengung in gebogene Abschnitte erstrecken, wodurch eine Dehnung der Innenbreite IW bereitgestellt wird.

11. PEF-Kammer (1) nach einem der Ansprüche 5 bis 10, wobei sich die Enden der geometrischen Verengung in gebogene Abschnitte erstrecken, die eine Dehnung der Innenbreite IW bereitstellen, wobei die gebogenen Abschnitte danach in einer röhrenförmigen breiteren Innenbreite IW fortgesetzt werden und wobei mindestens zwei Elektrodenpaare so angeordnet sind, dass jeweils zwei Elektrodeneinheiten (4, 5) jedes Elektrodenpaars einander gegenüber an den gebogenen Abschnitten angeordnet sind.

12. PEF-Kammer (1) nach einem der Ansprüche 6 bis 11, wobei das PEF-Behandlungsrohr (2) der PEF-Kammer (1) in einem Bereich zwischen Elektrodeneinheiten von verschiedenen Elektrodenpaaren in einer Richtung entlang der Länge L des PEF-Behandlungsrohrs (2) nicht leitend ist.

## Revendications

1. Chambre PEF (champ électrique pulsé) (1) comprenant un tube de traitement PEF (2), une enveloppe (3) et au moins deux électrodes unitaires (4, 5), ***caractérisée en ce que*** lesdites au moins deux électrodes unitaires (4, 5) sont insérables pour être fixées dans l'enveloppe (3) et à l'intérieur du tube de traitement PEF (2), lesdites au moins deux électrodes unitaires (4, 5) étant détachables et lesdites au moins deux électrodes unitaires (4, 5) étant agencées pour former une surface en arc semi-circulaire à l'intérieur du tube de traitement PEF (2).

2. Chambre PEF (1) selon la revendication 1, dans laquelle lesdites au moins deux électrodes unitaires (4, 5) sont filetées et insérables par vissage dans des écrous unitaires (6, 7) disposés dans l'enveloppe (3).

3. Chambre PEF (1) selon la revendication 1 ou 2, dans laquelle les deux électrodes unitaires (4, 5) constituent une paire d'électrodes.

4. Chambre PEF (1) selon l'une quelconque des revendications 1 à 3, dans laquelle le tube de traitement PEF (2) a deux extrémités ouvertes (8, 9) ayant des moyens de fixation (10, 11) permettant à la chambre PEF (1) d'être un dispositif enfichable.

5. Chambre PEF (1) selon l'une quelconque des revendications précédentes, dans laquelle le tube de traitement PEF (2) a une longueur L et une largeur interne IW d'un côté du tube à l'autre côté du tube de traitement PEF (2) dans une section transversale perpendiculaire à la longueur L de celui-ci, dans laquelle le tube de traitement PEF (2) a un rétrécissement géométrique de la largeur interne IW quelque part le long de la longueur L du tube de traitement PEF (2), et dans laquelle les au moins deux électrodes unitaires (4, 5) sont disposées à l'opposé l'une de l'autre au niveau ou près du rétrécissement géométrique de la largeur interne IW le long de la longueur L du tube de traitement PEF (2).

6. Chambre PEF (1) selon l'une quelconque des revendications précédentes, la chambre PEF (1) comprenant au moins deux paires d'électrodes.

7. Chambre PEF (1) selon l'une quelconque des revendications précédentes, dans laquelle le tube de traitement PEF (2) a une longueur L et une largeur interne IW d'un côté du tube à l'autre côté du tube de traitement PEF (2) dans une section transversale perpendiculaire à la longueur L de celui-ci, dans laquelle le tube de traitement PEF (2) a un rétrécissement géométrique de la largeur interne IW quelque part le long de la longueur L du tube de traitement PEF (2), dans laquelle au moins deux paires d'électrodes sont disposées de telle sorte que les deux électrodes unitaires (4, 5) de chaque paire d'électrodes sont disposées à l'opposé l'une de l'autre à l'intérieur du rétrécissement géométrique de la largeur interne IW le long de la longueur L du tube de traitement PEF (2), et dans laquelle les au moins deux paires d'électrodes sont disposées à une distance A l'une de l'autre.

8. Chambre PEF (1) selon la revendication 7, deux paires d'électrodes étant disposées dans la chambre PEF de telle sorte qu'une première paire d'électrodes est disposée au début du rétrécissement géométrique de la largeur interne IW le long de la longueur L, et une deuxième paire d'électrodes étant disposée à la fin du rétrécissement géométrique de la largeur interne IW le long de la longueur L.

9. Chambre PEF (1) selon l'une quelconque des revendications 5 à 8, dans laquelle le rétrécissement géométrique a une forme de tube venturi.

10. Chambre PEF (1) selon l'une quelconque des revendications 5 à 9, dans laquelle des extrémités du rétrécissement géométrique s'étendent en sections courbées fournissant un allongement de la largeur interne IW.

11. Chambre PEF (1) selon l'une quelconque des revendications 5 à 10, dans laquelle des extrémités du rétrécissement géométrique s'étendent en sections courbées fournissant un allongement de la largeur interne IW, lesdites sections courbées se poursuivant ensuite en une largeur interne tubulaire plus grande IW, et dans laquelle au moins deux paires d'électrodes sont disposées de telle sorte que les deux électrodes unitaires (4, 5) de chaque paire d'électrodes sont disposées à l'opposé l'une de l'autre et au niveau des sections courbées.

12. Chambre PEF (1) selon l'une quelconque des revendications 6 à 11, le tube de traitement PEF (2) de la chambre PEF (1) étant non conducteur dans une zone entre des électrodes unitaires issues de différentes paires d'électrodes dans une direction le long de la longueur L du tube de traitement PEF (2).
